# EUROPÄISCHE PATENTSCHRIFT

(11) **EP 0 432 440 B1**
(45) Veröffentlichungstag und Bekanntmachung des Hinweises auf die Patenterteilung: **25.05.1994**
(21) Anmeldenummer: 90121095.5
(22) Anmeldetag: 03.11.1990
(51) Int. Cl.: F16K 31/40, E03C 1/05

(54) **Elektrisch gesteuerte Armatur**
Electrically actuated valve
Vanne commandée électriquement

(30) Priorität: 16.11.1989 CH 4125/89
(43) Veröffentlichungstag der Anmeldung: 19.06.1991
(73) Patentinhaber: KWC AG, CH-5726 Unterkulm (CH)
(72) Erfinder: Hochstrasser, Ferdinand, CH-5105 Auenstein (CH); Oesterle, Helmut, A-6800 Feldkirch (AT)
(74) Vertreter: Patentanwälte Schaad, Balass, Menzl & Partner AG

(56) Entgegenhaltungen:
- DE-A- 3 507 144
- GB-A- 1 551 981
- US-A- 3 306 570

## Beschreibung

Die vorliegende Erfindung betrifft eine elektrisch gesteuerte Armatur gemäss dem Oberbegriff des Anspruches 1. Solche Armaturen sind z.B. aus der DE-A-3 507 144 bekannt.

Im Handel erhältliche Armaturen weisen für das Warm- und Kaltwasser je ein hydraulisch betätigbares Absperrventil mit einem darin integrierten Hilfsventil auf, welches zum Oeffnen des Absperrventils mittels eines Elektromagneten geöffnet wird. Zum Unterbrechen des Wasserflusses wird der Elektromagnet ausgeschaltet, wodurch das Hilfsventil und das mittels diesem angesteuerte Absperrventil schliessen. Die Elektromagnete werden von einer elektronischen Steuerung mit einem Sensor angesteuert, wobei der Wasserfluss so lange freigegeben ist, als der Sensor zu waschende Hände im Bereich der Armatur erkennt. Die Absperrventile weisen je einen membranförmigen Verschlussteil auf, welcher mit einem ortsfesten, ringförmigen Ventilsitz zusammenwirkt. Um den Ventilsitz herum verläuft ein Ringkanal, der mit dem betreffenden Wassereinlass verbunden ist. Im Innern des Ventilsitzes ist eine Austrittsöffnung angeordnet, welche über eine Leitung in ein Mischventil mündet. Im Mischventil wird das Warm- und Kaltwasser gemischt und das Mischwasser dem Auslass zugeleitet. Bezüglich des Verschlussteils ist auf der dem Ventilsitz gegenüberliegenden Seite ein Vorsteuerraum vorgesehen, der über einen kleinen Durchlass im Ventilsitz mit dem Ringkanal strömungsverbunden ist. Im Bereich der Austrittsöffnung weist der Verschlussteil eine weitere Oeffnung auf, die von einem Hilfsventilsitz begrenzt ist. Der Strömungsquerschnitt dieser Oeffnung ist grösser als der Strömungsquerschnitt des Durchlasses. Der Ventilsitz wirkt mit einem tauchankerförmigen Verschlusselement zusammen, welches beim Erregen des Elektromagneten vom Hilfsventilsitz abgehoben wird und beim Entregen des Elektromagneten auf dem Hilfsventilsitz wieder zur Anlage kommt. Bei geschlossenem Hilfsventil entspricht der Druck im Inneren des Vorsteuerraumes dem Druck des durch den betreffenden Einlass zugeführten Wassers. Infolge des Flächenunterschiedes der gegenseitigen Druckbeaufschlagung des membranförmigen Verschlussteils im Bereich des Ringkanals bzw. des Vorsteuerraums wird der Verschlussteil auf den Ventilsitz gepresst. Zum Oeffnen des Absperrventils wird das Verschlusselement durch Erregen des Elektromagneten vom Hilfsventilsitz abgehoben. Der Vorsteuerraum wird dadurch mit dem Auslass verbunden, was zur Folge hat, dass der Druck im Vorsteuerraum sinkt. Dadurch wird der Verschlussteil vom Ventilsitz abgehoben und die Wasserströmung vom Ringkanal in die Austrittsöffnung freigegeben. Sobald durch Entregen des Elektromagneten das Verschlusselement wieder am Hilfsventilsitz zur Anlage kommt, steigt der Druck im Vorsteuerraum wieder an, was zur Folge hat, dass der Verschlussteil am Ventilsitz zur Anlage kommt. Zum Betätigen dieser Armatur wird eine erhebliche Menge elektrischer Energie benötigt, was ein mit dem Netz betriebenes Speisegerät erforderlich macht.

Eine gattungsgemässe Armatur ist in der DE-A-35 07 144 offenbart. Sie weist für das Kalt- und das Warmwasser je ein hydraulisch betätigtes Absperrventil auf, in dessen Vorsteuerraum jeweils das Hilfsventil angeordnet ist. Der Vorsteuerraum ist über eine von einem Hilfsventilsitz umrandete Oeffnung im Verschlussteil des Absperrventils mit der Austrittsöffnung verbunden. Das mit dem Hilfsventilsitz zusammenwirkende Verschlusselement weist ein in den Vorsteuerraum hineinragendes und die Wand des Vorsteuerraumes durchdringendes, vorzugsweise hebelartiges Steuerorgan auf. In der Wand ist das Steuerorgan durch eine Dichtung aus einem gummielastische Material abgedichtet und gelagert. Die Steuerorgane der beiden Absperrventile sind über ein Steuergestänge mit einem Antriebsglied, beispielsweise einem elektrischen Stellglied verbunden.

Die US-A-3,306,570 offenbart eine Ventilanordnung bei der der Vorsteuerraum eines hydraulisch betätigten Absperrventils bzw. die Vorsteuerräume mehrerer hydraulisch betätigter Absperrventile über eine Leitung mit einem einzigen Hilfsventil verbunden sind. Dabei kommunizieren alle Vorsteuerräume miteinander.

Es ist deshalb eine Aufgabe der vorliegenden Erfindung, die gattungsgemässe Armatur derart weiterzubilden, dass sie bei geringem Energieverbrauch und mit einfachen Absperrventilen zum blockartigen Aufbau geeignet ist. Es soll der Betrieb einer solchen Armatur mit einer Batterie oder einem Akkumulator über längere Zeit gewährleistet sein.

Die Aufgabe wird durch eine Armatur gelöst, die Merkmale des Anspruches 1 aufweist.

Die beiden Hilfsventile werden mittels einer einzigen, gemeinsamen elektrisch gespeisten Antriebsanordnung betätigt. Eine gemeinsame Antriebsanordnung für beide Hilfsventile benötigt weniger elektrische Energie als zwei individuelle Antriebsanordnungen für die Hilfsventile. Ueberdies wird ein einfacher Aufbau der Armatur erzielt.

Bevorzugte Ausbildungsformen der vorliegenden Erfindung sind in den abhängigen Ansprüchen angegeben.

Die Erfindung wird nun anhand von in den Zeichnungen dargestellten Ausführungsbeispielen näher erläutert. Es zeigen rein schematisch:
- Fig. 1: in Ansicht und teilweise geschnitten eine vereinfacht dargestellte Armatur,
- Fig. 2 und 3: in einem Vertikalschnitt bzw. in Seitenansicht einen Teil der Armatur gemäss Fig. 1, wobei die Strömungswege in die Schnittebene verlegt gezeigt sind,
- Fig. 4 und 5: in einem Schnitt bzw. in Draufsicht ein Keramikscheibenventil,
- Fig. 6: in schematischer Darstellung einen Kurbeltrieb zum Betätigen des Keramikscheibenventils,
- Fig. 7 und 8: in Ansicht teilweise geschnitten und in einem Vertikalschnitt mit in die Schnittebene verlegten Strömungswegen eine weitere Ausbildungsform der Armatur mit einem Elektromagneten zum Betätigen der Hilfsventile, und
- Fig. 9 bis 12: in Ansicht bzw. Seitenansicht und teilweise geschnitten zwei weitere Ausbildungsformen der Armatur, wobei die Hilfsventile über verschwenkbare Permanentmagnete gesteuert sind.

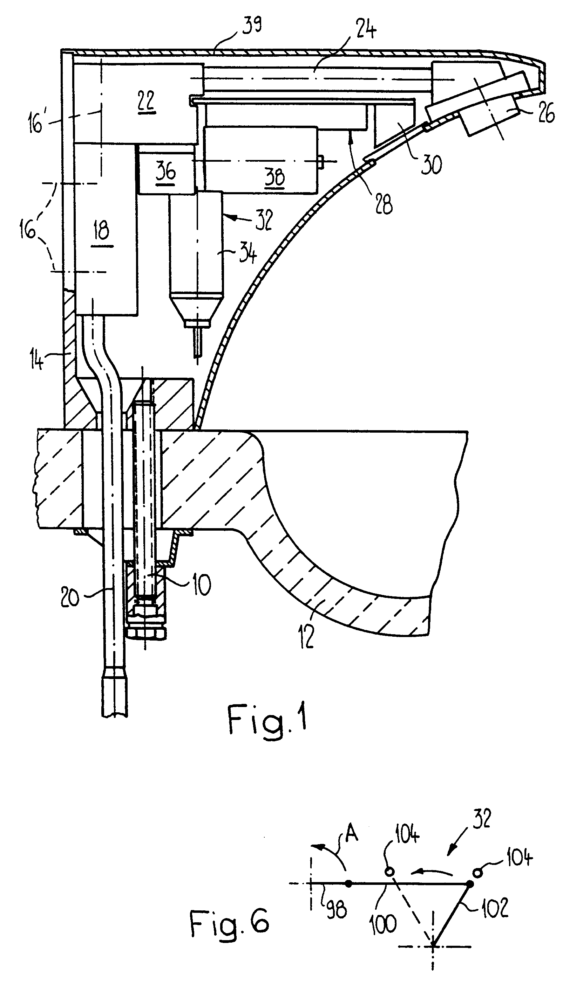

Die in der Fig. 1 gezeigte, sanitäre Armatur weist einen mittels eines Schraubenbolzens 10 an einem Waschbecken 12 befestigten L-förmigen Tragteil 14 auf. Am Tragteil 14 ist mittels strichpunktiert angedeuteten Schrauben 16 ein Absperrventilblock 18 befestigt, in welchen je eine Zuleitung 20 für das Kalt- und das Warmwasser mündet. Von diesen Zuleitungen 20 ist nur eine sichtbar. Auf dem Absperrventilblock 18 sitzt ein Hilfsventilblock 22, der mittels strichpunktiert angedeuteten Schrauben 16′ am Absperrventilblock 18 befestigt ist. Von Hilfsventilblock 22 führt eine Auslassleitung 24 zu einem Wasserauslasskopf 26. Vom Hilfsventilblock 22 ist eine nur schematisch gezeigte elektronische Steueranordnung 28 gehalten, die einen Sensor 30 aufweist, welcher erkennt, ob sich zu waschende Hände im Bereich des Waschbeckens 12 befinden oder nicht. Eine Antriebsanordnung 32 für die im Hilfsventilblock 22 vorgesehenen Hilfsventile - diese sind weiter unten näher beschrieben - weist ein als Gleichstrommotor mit integriertem Untersetzungsgetriebe ausgebildetes Antriebsglied 34 und ein schematisch angedeutetes Uebertragungselement 36 auf, welches das Antriebsglied 34 mit den Hilfsventilen verbindet. Die Speisung der Steueranordnung 28 und des Antriebsgliedes 34 erfolgt durch eine Batterie 38. Die aktiven Teile der Armatur sind von einer wegnehmbaren Haube 39 überdeckt.

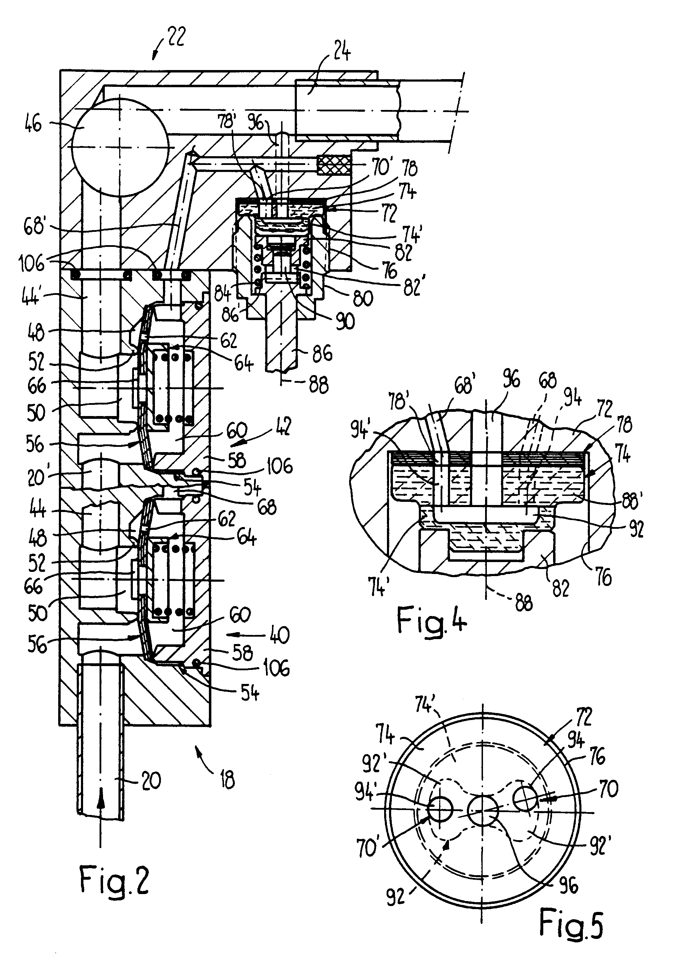

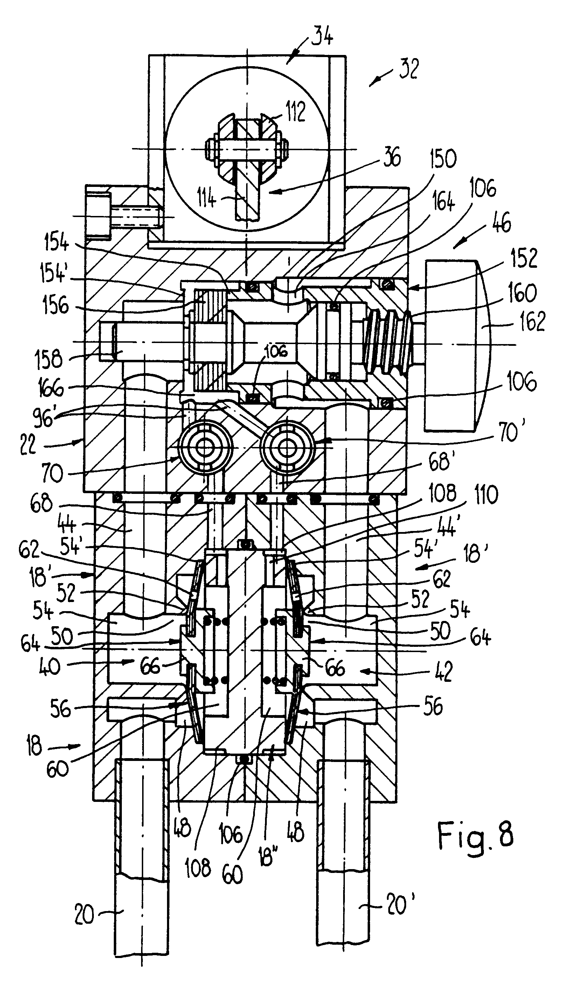

Der Absperrventilblock 18 und Hilfsventilblock 22 sind in den Fig. 2 und 3 vergrössert dargestellt. Im Absperrventilblock 18 ist ein erstes Absperrventil 40 für das Warmwasser und ein zweites Absperrventil 42 für das Kaltwasser vorgesehen. Diese sind übereinander und gegeneinander seitlich versetzt angeordnet und einlassseitig mit der betreffenden Zuleitung 20 für das Warmwasser bzw. 20′ für das Kaltwasser verbunden. Auslassseitig stehen die beiden Absperrventile 40, 42 über in den Absperrventilblock 18 und Hilfsventilblock 22 eingearbeitete Leitungen 44, 44′ mit einem in der Fig. 2 angedeuteten, im Hilfsventilblock 22 vorgesehenen Mischventil 46 in Strömungsverbindung. Das Mischventil 46 mündet in die Auslassleitung 24. Eine mögliche Ausbildungsform des Mischventils 46 ist in der Fig. 8 dargestellt und weiter unten näher beschrieben.

Jedes Absperrventil 40, 42 weist einen mit der betreffenden Zuleitung 20, 20′ verbundenen Ringkanal 48 und einen dazwischen angeordneten, im Querschnitt etwa kreisförmigen, mit der entsprechenden Leitung 44, 44′ verbundenen Austritt 50 auf. Der Austritt 50 ist vom Ringkanal 48 durch einen kreisringförmigen Ventilsitz 52 getrennt. Der Ringkanal 48, Austritt 50 und Ventilsitz 52 sind im Bodenbereich einer im wesentlichen zylinderförmigen, abgestuften, in den Absperrventilblock 18 eingearbeiteten Ausnehmung 54 ausgebildet. In die Ausnehmung 54 ist ein als gummielastische Membrane ausgebildeter Verschlussteil 56 eingesetzt, welcher mit dem Ventilsitz 52 zusammenwirkt und den Ringkanal 48 und Austritt 50 überspannt. Der membranförmige Verschlussteil 56 ist entlang seiner Peripherie von einem in den Absperrblock 18 eingeschraubten Deckel 58 gehalten, welcher auf der dem Ventilsitz 52 abgewandten Seite des Verschlussteils 56 einen Vorsteuerraum 60 begrenzt. Der Vorsteuerraum 60 ist über einen kleinen Durchlass 62 im Verschlussteil 56 mit dem Ringkanal 48 und somit der betreffenden Zuleitung 20, 20′ verbunden. Vorsteuerraumseitig ist der gummielastische Verschlussteil 56 im Bereich des Ventilsitzes 52 und Austritts 50 mittels eines plattenförmigen Verstärkungsgliedes 64 versteift. Im Vorsteuerraum 60 ist eine sich am Verstärkungsglied 64 und Deckel 58 abstützende Druckfeder 65 vorgesehen, die den Verschlussteil 56 mit geringer Kraft gegen den Ventilsitz 52 hin beaufschlagt. Das Verstärkungsglied 64 weist einen kopfförmigen Fortsatz 66 auf, mittels welchem es in einer zentralen Oeffnung im Verschlussteil 56 wasserdicht gehalten ist.

Die beiden Vorsteuerräume 60 sind je über eine eigene, in den Absperrventilblock 18 und Hilfsventilblock 22 eingearbeitete Steuerleitung 68 bzw. 68′ mit je einem im Hilfsventilblock 22 vorgesehenen Hilfsventil 70 bzw. 70′ verbunden. Die beiden Hilfsventile 70, 70′ sind in einem Keramikscheibenventil 72 ausgearbeitet, welches in den Fig. 4 und 5 vergrössert dargestellt ist.

Das Keramikscheibenventil 72 weist zwei aneinander anliegende Keramikscheiben 74, 74′ auf, die in eine zylinderförmige Ausnehmung 76 im Hilfsventilblock 22 eingesetzt sind. Die erste Keramikscheibe 74 liegt flächig an einer scheibenförmigen, gummielastischen Dichtung 78 an, welche andererseits am flachen Boden der Ausnehmung 76 anliegt. Diese Keramikscheibe 74 wird über eine hülsenförmig ausgebildete, in den Hilfsventilblock 22 eingeschraubte Haltemutter 80 in Richtung gegen die Dichtung 78 und den Boden der Ausnehmung 76 gepresst und ortsfest gehalten. Die andere Keramikscheibe 74′ ist im Durchmesser kleiner ausgebildet als die Keramikscheibe 74, liegt flächig an dieser an und ist im Innern der hülsenförmigen Haltemutter 80 angeordnet. Die Keramikscheibe 74′ ist mit einem Mitnehmer 82 beispielsweise über eine Sechskant- oder Vierkantverbindung drehfest verbunden. Am Mitnehmer 82 liegt das eine Ende einer Druckfeder 84 an, mittels welcher die Keramikscheibe 74′ gegen die Keramikscheibe 74 gepresst ist. Ein Betätigungsschaft 86 ist in der hülsenförmigen Haltemutter um die Achse 88 drehbar gelagert. Diese steht senkrecht zu den Flächen 88′, mit welchen die Keramikscheiben 74, 74′ aneinander anliegen. Der Betätigungsschaft 86 ist an seinem den Mitnehmer 82 zugewandten Endbereich an zwei einander diametral gegenüberliegenden Zonen abgeflacht und greift, eine drehfeste Verbindung mit diesem bildend, in einen Schlitz 82′ im Mitnehmer 82 ein. Im weiteren weist der Betätigungsschaft 86 in seinem diesseitigen Ende einen in axialer Richtung über die abgeflachten Zonen vorstehenden Zapfen 90 auf, welcher zur Führung des Mitnehmers 82 in ein entsprechendes Loch in diesem eingreift. Im weiteren ist am Betätigungsschaft 86 ein Kragen 86′ angeformt, an welchem das vom Mitnehmer 82 entfernte Ende der Druckfeder 84 anliegt und mittels welchem der Betätigungsschaft 86 gegen die Kraft der Druckfeder 84 in der Haltemutter 80 gehalten ist.

Die bewegliche Keramikscheibe 74′ weist eine gegen die Keramikscheibe 74 hin offene, ansonsten geschlossene, in Durchmesserrichtung verlaufende Steuernut 92 auf, die an ihren radialen Enden eine Verbreiterung 92′ aufweist (vgl. insbesondere Fig. 5). In der feststehenden Keramikscheibe 74 sind zwei Steuerdurchlässe 94, 94′ vorgesehen, die mit der betreffenden Steuerleitung 68 bzw. 68′ durch Löcher 78′ in der Dichtung 78 hindurch strömungsverbunden sind. Die beiden Steuerdurchlässe 94, 94′ liegen einander bezüglich der Achse 88 ungefähr diametral leicht versetzt gegenüber. Die Steuerdurchlässe 94 wirken im Bereich der Erweiterungen 92′ mit der Steuernut 92 zusammen. Diese ist über einen zentralen Durchlass 96 in der Steuerscheibe 74 dauernd mit der Auslassleitung 24 verbunden.

In der in den Figuren gezeigten Verdrehlage der Keramikscheibe 74′ bezüglich der festen Keramikscheibe 74 stehen die Steuerleitungen 68, 68′ durch die Steuerdurchlässe 94, 94′ und die Steuernut 92 und den gemeinsamen, zentralen Durchlass 96 mit der Auslassleitung 24 in Strömungsverbindung. Wird hingegen die Keramikscheibe 74′ um die Drehachse 88 im Uhrzeigersinn (Fig. 5) verdreht, so wird zuerst der Steuerdurchlass 94 von der entsprechenden Erweiterung 92′ abgetrennt und erst beim gleichsinnigen Weiterdrehen der Keramikscheibe 74′ wird auch der andere Steuerdurchlass 94′ unterbrochen. Beim Drehen im Gegenuhrzeigersinn kommt folglich zuerst der Steuerdurchlass 94′ mit der entsprechenden Erweiterung 92′ in Verbindung und der Steuerdurchlass 94 wird erst später geöffnet. Dies hat zur Folge, dass beim Oeffnen des Keramikscheibenventils 74 immer zuerst die mit dem Absperrventil 42 für das Kaltwasser verbundene Steuerleitung 68′ mit der Auslassleitung 24 verbunden wird und beim Schliessen des Keramikscheibenventils 72 immer zuerst die mit dem Absperrventil 40 für das Warmwasser verbundene Steuerleitung 68 unterbrochen wird.

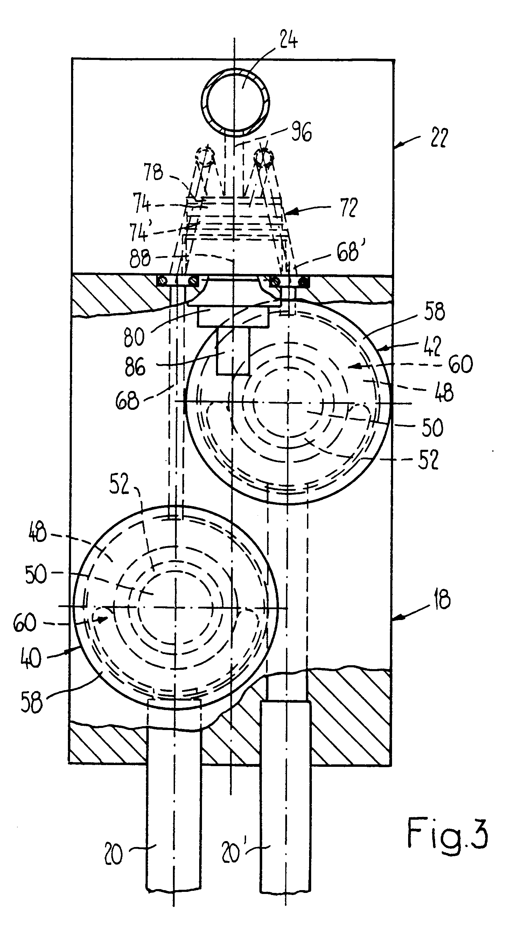

In der Fig. 6 ist die Antriebsanordnung 32 für das Keramikscheibenventil 72 schematisch dargestellt. An der Abtriebswelle des als Gleichstrom-Getriebemotor ausgebildeten Antriebsgliedes 34 (vgl. Fig. 1) ist eine Kurbel 98 befestigt, die über eine Koppel 100 an einer am Betätigungsschaft 86 des Keramikscheibenventils 72 angeordneten Schwinge 102 angelenkt ist. Beim Drehen der Kurbel 98 in Pfeilrichtung A um 180° wird die Schwinge 102 von der in der Fig. 6 mit ausgezogenen Linien dargestellten Lage in die gestrichelt angedeutete Lage verschwenkt, was zur Folge hat, dass die Keramikscheibe 74′ um denselben Winkel (ca. 60°) gegenüber der festen Keramikscheibe 74 verdreht wird. Beim Weiterdrehen der Kurbel 98 in Pfeilrichtung A um weitere 180° wird die Schwinge 102 wieder in ihre ursprüngliche Stellung zurückverdreht. Ein solcher Kurbeltrieb hat den Vorteil, dass beim Herausschwenken der Kurbel 98 aus jenen Lagen, in welchen die Längserstreckungen der Kurbel 98 und Koppel 100 übereinstimmen, auf die Schwinge 102 grosse Drehmomente mit verhältnismässig geringen, auf die Kurbel 98 einwirkenden Drehmomenten ausgeübt werden können. Selbst wenn die Keramikscheiben 74, 74′ aneinander haften sollten, kann somit mit einem geringen Energieverbrauch ein Lösen dieser Haftung erfolgen. Im weiteren kann der Gleichstrommotor 34 immer in derselben Drehrichtung angetrieben sein. An den freien Enden der Schwinge 102 ist ein kleiner, nicht gezeigter Permanentmagnet angeordnet, der beim Erreichen einer Endlage der Schwinge 102 ein dort fest angeordnetes Reedrelais 104 betätigt. Dadurch ist eine einfache Ansteuerung des Antriebes 34 ermöglicht.

Der Vollständigkeit halber sei noch erwähnt, dass an den Uebergangsstellen vom Absperrventilblock 18 zum Hilfsventilblock 22 die Leitungen 44, 44′ und Steuerleitungen 68, 68′ mittels O-Ringen 106 abgedichtet sind. Auch im Bereich der Deckel 58 sind O-Ringe 106 vorgesehen, um die Vorsteuerräume 60 abzudichten.

Die in den Figuren 1 bis 6 dargestellte Armatur arbeitet wie folgt: Sind die beiden Hilfsventile 70, 70′ durch Ausser-Ueberlappung-Bringung der Steuerdurchlässe 94, 94′ mit der Steuernut 92 geschlossen, so ist der hydraulische Steuerkreis, d.h. Zuleitung 20, 20′ - Durchlass 62 im Verschlussteil 56 - Vorsteuerraum 60 - Steuerleitung 68, 68′ - Steuernut 92 - zentraler Durchlass 96 - Auslassleitung 40, unterbrochen. Durch den Durchlass 62 ist der Druck im Ringkanal 48 und Vorsteuerraum 60 ausgeglichen. Durch den Flächenunterschied zwischen dem Ringkanal 48 und der vorsteuerraumseitigen Fläche des Verschlussteils 56 und unterstützt durch die Druckfeder 65 wird der Verschlussteil 56 im wesentlichen proportional zum Unterschied des Wasserdruckes in der Zuleitung 20, 20′ und dem Wasserdruck in der Auslassleitung 24 - dieser entspricht im wesentlichen dem Umgebungsdruck - gegen den Ventilsitz 52 gepresst. Dabei verhindert das Verstärkungsglied 64 eine Ueberanspruchung und Ausbuchtung des gummielastischen Verschlussteils 56. Die beiden Absperrventile 40, 42 sind geschlossen und der Wasserfluss unterbrochen.

Werden nun die zu waschenden Hände in den Erkennungsbereich des Sensors 30 verbracht, speist die Steueranordnung 28 das Antriebsglied 34 solange, bis die Schwinge 102 in ihre andere Endlage verschwenkt ist. Sobald diese Endlage erreicht ist, gibt das betreffende Reedrelais 104 an die Steueranordnung 28 ein Signal ab, welches das Antriebsglied 34 abstellt. Durch dieses Verschwenken der Schwinge 102 wurde auch die Keramikscheibe 74′ um die Achse 88 bezüglich der festen Keramikscheibe 74 verdreht. Dabei wird zuerst der hydraulische Steuerkreis des Absperrventils 42 für Kaltwasser und anschliessend der Steuerkreis des Absperrventils 40 für Warmwasser geschlossen. Dadurch sind nun die Vorsteuerräume 60 über die Steuerleitungen 68, 68′, das Keramikscheibenventil 72 und den zentralen Durchlass 96 mit der Auslassleitung 24 verbunden. Da der Querschnitt dieses Teils des Steuerkreises grösser ist als der Strömungsquerschnitt des Durchlasses 62, wird aus dem Vorsteuerraum 60 mehr Wasser abgelassen als durch den Durchlass 62 von der Zuleitung 20, 20′ in den betreffenden Vorsteuerraum 60 eintreten kann. Somit nimmt der Druck im betreffenden Vorsteuerraum 60 ab, was zur Folge hat, dass der membranförmige Verschlussteil 56 entgegen der Kraft der Druckfeder 65 vom Ventilsitz 52 abgehoben wird. Das zugeleitete Wasser kann nun vom Ringkanal 48 in den Austritt 50 und somit durch die Leitungen 44, 44′ zum Mischventil 46 fliessen. Im Mischventil 46 wird das Warm- und Kaltwasser gemischt und das Mischwasser durch die Auslassleitung 24 zum Wasserauslaufkopf 26 geführt. Da beim Oeffnen der Hilfsventile 70, 70′ der Druck in den Vorsteuerräumen langsam abnimmt, werden die Absperrventile 40, 42 langsam geöffnet, was Druckschläge in den Zuleitungen 20, 20′ verhindert.

Werden nun die Hände aus dem Erkennungsbereich des Sensors 30 entfernt, gibt dieser ein Signal an die Steueranordnung 28 ab, welche das Antriebsglied 34 in Gang setzt. Dabei wird die Schwinge 102 wieder in die ursprüngliche Lage zurückverschwenkt, was zu Folge hat, dass zuerst das dem Steuerkreis des Absperrventils 40 für Warmwasser zugeordnete Hilfsventil 70 und anschliessend das andere Hilfsventil schliessen. Beim Schliessen des betreffenden Hilfsventils 70, 70′ wird der betreffende Steuerkreis unterbrochen, was zur Folge hat, dass der Druck im Vorsteuerraum 60 infolge des Durchlasses 62 wieder auf den Druck des Wassers im Ringkanal 48 ansteigt. Entsprechend dem langsamen Anstieg des Druckes im Vorsteuerraum 60 wird der Verschlussteil 56 gegen den Ventilsitz 52 bewegt, bis dieser daran satt anliegt. Durch das Verschieben des Verschlussteils 56 wird die von der Zuleitung 20, 20′ zum Mischventil 46 strömende Wassermenge kontinuierlich verringert. Dabei werden wiederum Druckschläge in den Zuleitungen 20, 20′ vermieden. Die beiden Absperrventile 40, 42 sperren nun nacheinander den Fluss des Warm- und Kaltwassers. Durch das jeweilige vorgängige Oeffnen des Absperrventils 42 für Kaltwasser und das jeweilige vorgängige Schliessen des Absperrventils 40 für Warmwasser wird ein Verbrühen der Hände vermieden.

Das Antriebsglied 34 ist nur kurzzeitig eingeschaltet, treibt über das Uebertragungselement 36 beide Hilfsventile 70, 70′ gemeinsam an und das Keramikscheibenventil 72 benötigt für die Betätigung geringe Kräfte, so dass die in den Figuren 1 bis 6 gezeigte Armatur mit einem äusserst geringen Energieverbrauch auskommt.

Bei den in den weiteren Figuren dargestellten Armaturen sind gleichwirkende Teile wie in der Armatur gemäss den Figuren 1 bis 6 mit gleichen Bezugszeichen versehen.

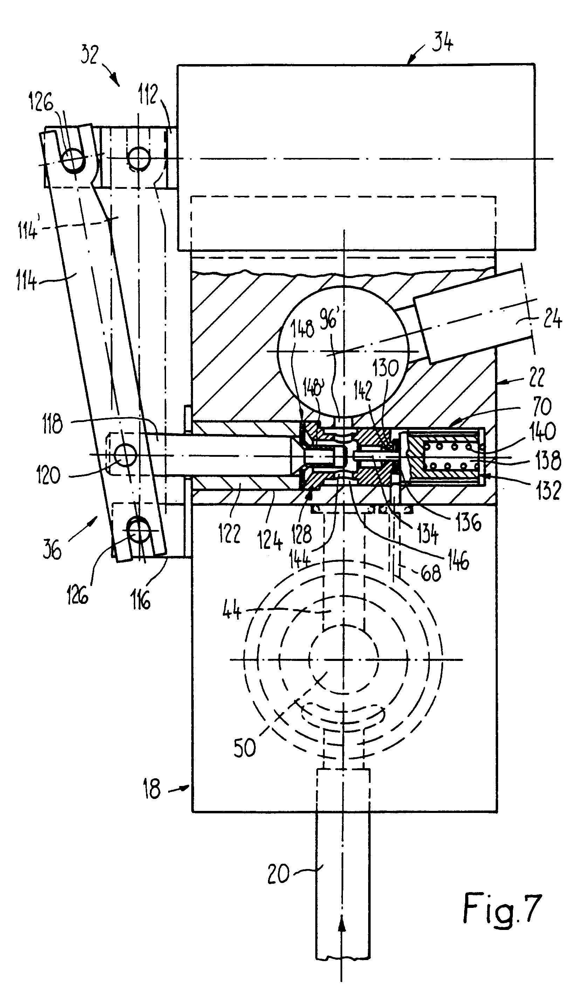

In den Figuren 7 und 8 ist eine weitere Ausbildungsform der Wasserarmatur dargestellt. Diese weist wiederum einen Absperrventilblock 18 und einen daran aufliegenden, mit diesem verschraubten Hilfsventilblock 22 auf. In den Absperrventilblock 18 münden die beiden Zuleitungen 20, 20′ für das Warm- und Kaltwasser und vom Hilfsventilblock 22 führt die Auslassleitung 24 weg.

Der Absperrventilblock 18 besteht im wesentlichen aus drei Teilen, nämlich zwei identischen, spiegelbildlich angeordneten Teilblöcken 18′ und einem zentralen, symmetrischen Blockteil 18˝. Jedem Teilblock 18′ ist ein Absperrventil 40, 42 zugeordnet; diese sind durch den Blockteil 18˝ voneinander getrennt. In einer ungefähr zylinderförmigen, im Durchmesser abgestuften und gegen den Blockteil 18˝ hin offenen Ausnehmung 54 in jedem Teilblock 18′ ist ein mit der betreffenden Zuleitung 20, 20′ verbundener Ringkanal 48 ausgebildet, der auf seiner in radialer Richtung gesehen inneren Seite von einem ringförmigen Ventilsitz 52 begrenzt ist. Der vom Ventilsitz 52 in radialer Richtung gesehen aussen begrenzte Teil der Ausnehmung 54 bildet einen Austritt 50 für den vom Absperrventil 40, 42 freigegebenen Wasserfluss. Die Austritte 50 sind über in die Teilblöcke 18′ und den Hilfsventilblock eingearbeitete Leitungen 44, 44′ mit dem im Hilfsventilblock 22 vorgesehenen Mischventil 46 verbunden.In jeder Ausnehmung 54 ist ein als Membrane aus gummielastischem Material ausgebildeter Verschlussteil 56 vorgesehen, der mit dem betreffenden Ventilsitz 52 zusammenwirkt. Der Verschlussteil 56 wird entlang seinem Umfangsbereich von in die Ausnehmungen 54 eingreifenden Blockteil 18˝ und einer ringförmigen Erweiterung 54′ der Ausnehmung 54 klemmend festgehalten.

Der zentrale Blockteil 18′ begrenzt die beiden den Absperrventilen 40, 42 zugeordneten und bezüglich den Verschlussteilen 56 auf der den Ventilsitzen 52 abgewandten Seite vorgesehenen Vorsteuerräume 60. Diese sind je über einen Durchlass 62 im Verschlussteil 56 mit dem Ringkanal 48 strömungsmässig verbunden. Mittels eines kopfförmigen Fortsatzes 66 ist am Verschlussteil 56 ein plattenförmiges Verstärkungsglied 64 befestigt, welches vorsteuerraumseitig im wesentlichen im Bereich des Austritts 50 und Ventilsitzes 52 am gummielastischen Verschlussteil 56 anliegt. Zwischen dem Verstärkungsglied 64 und dem Blockteil 18˝ ist je eine Druckfeder 65 vorgesehen. Diese weist allerdings im Verhältnis zu den durch den Wasserdruck auf den Verschlussteil 56 ausgeübten Kräften eine geringe Druckkraft auf.

Der im wesentlichen zylinderförmige Blockteil 18˝ ist entlang seines Umfanges mittig mittels eines O-Ringes 106 abgedichtet, um die beiden Absperrventile 40, 42 voneinander zu trennen und zugleich ein Abdichten gegen aussen beim Aneinanderanfügen der beiden Teilblöcke 18′ zu gewährleisten. In axialer Richtung des Blockteiles 18˝ gesehen sind aussen an diesem zwei Umfangsnuten 108 ausgebildet, die über in radialer Richtung verlaufende Bohrungen 110 mit den betreffenden Vorsteuerräumen 60 in Verbindung stehen. Diese Umfangsnuten 108 sind durch die in den Teilblöcken 118′ sowie im Hilfsventilblock 22 ausgebildeten Steuerleitungen 68, 68′ mit den Hilfsventilen 70, 70′ verbunden. Von den Hilfsventilen 70, 70′ führen Leitungen 96′ zur Auslasseite des Mischventils 46.

Die Antriebsanordnung 32 für die beiden Hilfsventile 70, 70′ weist ein als bi-stabilen Elektromagnet ausgebildetes Antriebsglied 34 und ein als Untersetzungsgestänge ausgebildetes Uebertragungselement 36 auf. Der handelsübliche bi-stabile Elektromagnet weist einen Tauchanker 112 auf, an dessen freiem Ende ein einarmiger Hebel 114 angelenkt ist, welcher andernends an einem am Hilfsventilblock 22 angeordneten Lagerelement 116 verschwenkbar gelagert ist. Beidseitig dieses einarmigen Hebels 114 ist je ein Stössel 118 mittels eines gemeinsamen Lagerzapfens 120 angelenkt. Die beiden Stössel 118 sind nebeneinander und parallel zu einander angeordnet und in ihrer Längsrichtung in einer Lagerhülse 122 verschiebbar geführt. Die Lagerhülsen 122 sind in parallel zueinander verlaufende und nebeneinander abgeordnete Bohrungen 124 im Hilfsventilblock 22 eingesetzt. Die Lage des Hebels 114 in einer Richtung rechtwinklig zum Lagerzapfen 120 und zur Längserstreckung der Stössel 118 ist somit durch die Lagerhülse 122 definiert. Aus diesem Grunde ist der Hebel 114 an seinen beiden Enden gabelförmig ausgebildet und, in Längsrichtung des Hebels 114 gesehen, in den am Tauchanker 112 bzw. Lagerelement 116 befestigten Zapfen 126 frei beweglich geführt. In ausgezogenen Linien ist in der Fig. 7 der Hebel 114 und Stössel 118 in seiner Ruhelage dargestellt. Strichpunktiert ist der Hebel 114 in Arbeitslage 114′ angegeben. In dieser Lage ist der Stössel 118 um den entsprechenden Hub nach rechts verschoben.

Im Innern der beiden nebeneinander und parallel zueinander angeordneten Bohrungen 124 im Hilfsventilblock 22 sind die beiden Hilfsventile 70, 70′ vorgesehen. Im Mittelbereich der Bohrung 124 befindet sich ein im wesentlichen hohlzylindrischer Einsatz 128, an welchem am vom Stössel 118 entfernten Ende ein ringförmiger Hilfsventilsitz 130 ausgebildet ist. Im Bereich zwischen dem Einsatz 128 und dem Boden der Bohrung 124 ist ein zylinderförmiges Verschlusselement 132 angeordnet, welches einen Betätigungsschaft 134 aufweist, welcher in Richtung gegen den Stössel 118 durch den Hilfsventilsitz 130 hindurch in das Innere des Einsatzes 128 eingreift. Auf dem Betätigungsschaft 134 sitzt ein Dichtring 136, welcher mit dem Hilfsventilsitz 130 zusammenwirkt und an der diesseitigen Stirnseite des Verschlusselementes 132 anliegt. Auf der dem Betätigungsschaft 134 angewandten Seite weist das Verschlusselement 132 ein Sackloch 138 auf, in welchem eine Druckfeder 140 angeordnet ist, die sich einerends am Verschlusselement 132 und andernends am Boden der Bohrung 124 anlehnt. Das Verschlusselement 132 ist in Längsrichtung der Bohrung 124 verschiebbar und im Durchmesser kleiner als der lichte Durchmesser der Bohrung 124 im Bereich des Verschlusselementes 132. Die Steuerleitung 68, 68′ mündet in den jeweiligen, vom Einsatz 128 und dem Boden der Bohrung 124 begrenzten Raum, in welchem sich das Verschlusselement 132 befindet. Der Vollständigkeit halber sei erwähnt, dass der Durchmesser des Betätigungsschaftes 134 kleiner ist als der Durchmesser der vom Hilfsventilsitz 130 begrenzten Auslassöffnung 142. Das Innere des Einsatzes 128 ist über in radialer Richtung verlaufende Bohrungen 144 mit einer umlaufenden Sammelnut 146 verbunden, welche über die Leitungen 96′ mit der Auslasseite des Mischventiles 46 in Strömungsverbindung steht.

Zwischen dem Einsatz 128 und dem diesseitigen Ende der Lagerhülse 122 ist eine hutförmige, gummielastische Dichtung 148 eingeklemmt, welche mit ihrem zylinderförmigen Ansatz 148′ an der Oberfläche einer Umfangsnut am diesseitigen verjüngten Endbereich des Stössels 118 dicht anliegt.

Bei sich in Ruhelage befindendem Hebel 114 und Stössel 118 ist das freie Ende des Stössels 118 vom freien Ende des Betätigungsschaftes 134 abgehoben, wie dies in der Fig. 7 gezeigt ist. Das betreffende Hilfsventil 70, 70′ ist geschlossen und das Verschlusselement 132, und somit der Dichtring 136, wird infolge des anstehenden Wasserdruckes und der druckwirksamen Fläche gegen den Hilfsventilsitz 130 gepresst. Diese Pressung wird durch die Druckfeder 140 unterstützt. Auf diese Druckfeder 140 könnte auch verzichtet werden, existiert doch immer eine resultierende Kraft in Schliessrichtung des Hilfsventiles 70, 70′, da der Betätigungsschaft 134 in die Auslasseite des Hilfsventiles 70, 70′ vorsteht.

Im Bereich des Mischventiles 46 weist der Hilfsventilblock 22 eine abgestufte, zylinderförmige Sacklochbohrung 150 auf, in die ein hohlzylinderförmiger Zapfen 152 eingesetzt ist. Das innere freie Ende dieses Zapfens 52 ist als ringförmiger Mischventilsitz 154 ausgebildet. Von diesem beabstandet weist die Sacklochbohrung 150 einen umlaufenden Absatz auf, der ebenfalls als Mischventilsitz 154′ dient. Zwischen diesen beiden Mischventilsitzen 154, 154′ ist eine Scheibe 156 aus gummielastischem Material vorgesehen, die auf einer Hubspindel 158 sitzt. Die Hubspindel 158 durchdringt die Stirnseite des Zapfens 152 und weist an ihrem äusseren Ende einen Drehknopf 162 auf. Die Hubspindel 158 ist am Zapfen 152 mittels eines Gewindes 160 gelagert, so dass durch Drehen am Drehknopf 162 die Hubspindel 158 in axialer Richtung verschoben wird, was zur Folge hat, dass die Scheibe 156 näher zum einen oder anderen Mischventilsitz 154 bzw. 154′ hin verschoben wird. Dadurch wird der freie Durchlass zwischen den treffenden Scheibenflächen und dem Mischventilsitz 154, 154′ verkleinert bzw. vergrössert. Die Durchtrittsöffnung zwischen der Scheibe 156 und dem Mischventilsitz 154′ steht durch die Leitung 44 mit dem Austritt 50 des Absperrventiles 40 für das Warmwasser in Verbindung. Die Durchtrittsöffnung zwischen der Scheibe 156 und dem Ventilsitz 154 ist durch den Hohlraum im Innern des Zapfens 152, radialen Oeffnungen 164 im Mittelbereich des Zapfens 152 und die Leitung 44′ mit dem Austritt 50 des Absperrventils 42 für das Kaltwasser verbunden. Der mantelförmige Raum zwischen der Sacklochbohrung 150 und dem Zapfen 152, welcher die Oeffnungen 164 mit der Leitung 44′ verbindet, ist durch O-Ringe 106 abgedichtet, die in entsprechende Nuten im Zapfen 152 eingesetzt sind. Je nach Lage der Scheibe 156 bezüglich der beiden Mischventilsitze 154, 154′ kann nun mehr oder weniger Kalt- bzw. Warmwasser in einen in die Auslassleitung 24 mündenden Mischraum 166, der die beiden Mischventilsitze 154, 154′ und den Zapfen 152 umgibt, fliessen. Dadurch ist durch Drehen am Drehknopf 162 die gewünschte Mischwassertemperatur wählbar.

Um den Innenraum des Zapfens 152 im Bereich der Hubspindel 158 gegen aussen abzudichten, weist die Hubspindel eine Verdickung 168 mit einer umlaufenden Nut 168′ auf, in welche ebenfalls ein O-Ring 106 eingelegt ist, der an der Innenwand des hohlzylinderförmigen Zapfens 52 gleitet.

Die Armatur gemäss den Figuren 7 und 8 funktioniert wie folgt: Bei sich in Ruhelage befindendem Hebel 114 sind die Hilfsventile 70, 70′ geschlossen. Dadurch ist der hydraulische Steuerkreis, d.h. Zuleitung 20, 20′ - Durchlass 62 - Vorsteuerraum 60 - Steuerleitungen 68, 68′ - Hilfsventile 70, 70′ - Leitungen 96′ - Auslassleitung 24, jedes Absperrventils 40, 42 unterbrochen. Wegen des Durchlasses 62 ist der Druck im Ringkanal 48 und im Vorsteuerraum 60 gleich gross. Infolge des Flächenunterschiedes der Druckbeaufschlagung im Bereich der Ringnut 48 und des Vorsteuerraumes 60 wird der Verschlussteil 56 an den Ventilsitz 52 gepresst. Die beiden Absperrventile 40, 42 sperren den Wasserfluss durch die Armatur. Werden nun von einem Sensor gemäss Fig. 1 zu waschende Hände erkannt, gibt die Steueranordnung 28 an das als bi-stabilen Elektromagneten ausgebildete Antriebsglied 34 einen Impuls, wodurch der Tauchanker 112 in den Elektromagneten hineingezogen und dort infolge der Remanenz festgehalten wird. Dadurch wird der Hebel 114 in die Arbeitslage 114′ verschwenkt, was zur Folge hat, dass das freie Ende des Stössels 118 nach einem bestimmten Hub auf das freie Ende des Betätigungsschaftes 134 aufläuft und diesen zusammen mit dem Verschlusselement 132 und dem Dichtring 136 nach rechts verschiebt und den Dichtring 136 vom Hilfsventilsitz 130 abhebt. Der Steuerkreis wird somit geöffnet und das Wasser kann zwischen der Auslassöffnung 142 und dem Betätigungsschaft 134 hindurch in den mit der Auslassleitung 24 verbundenen Mischraum 166 austreten. Da die Strömungsquerschnitte zwischen dem Vorsteuerraum 60 und der Auslassleitung 24 grösser sind als der Strömungsquerschnitt des Durchlasses 62, nimmt nun der Druck im Vorsteuerraum 60 ab, was zur Folge hat, dass der Verschlussteil 56 vom betreffenden Ventilsitz 52 abgehoben wird. Das Warm- bzw. Kaltwasser kann nun ungehindert vom betreffenden Ringkanal 48 in den Austritt 50 und durch die Leitungen 44, 44′ zum Mischventil 46 fliessen. In diesem werden nun, wie weiter oben beschrieben, durch Vergrössern bzw. Verkleinern der zulässigen Warmwasser- und Kaltwassermenge die gewünschte Mischtemperatur des durch die Auslassleitung 24 aus der Armatur ausströmnenden Wassers erzielt. Durch Verschieben der Scheibe 156 zu einem Mischventilsitz 154 bzw. 154′ kann nun sogar erreicht werden, dass nur Kalt- oder Warmwasser aus der Armatur ausströmt.

Werden nun die gewaschenen Hände aus dem Bereich des Sensors 30 entfernt, gibt die Steueranordnung 28 erneut einen Impuls entgegengesetzter Polarität an den bi-stabilen Elektromagneten 34 ab. Der Tauchanker 112 wird in Richtung gegen aussen verschoben, was ein Verschwenken des Hebels 114 in die Ruhelage zur Folge hat. Dabei läuft der Stössel 118 vom freien Ende des Betätigungsschaftes 134 ab, wodurch infolge der Kraft der Druckfeder 140 und dem Wasserdruck das Verschlusselement 132 mit dem Dichtring 136 in der Figur nach links verschoben werden und so das Hilfsventil 70 bzw. 70′ geschlossen wird. Dadurch wird der hydraulische Steuerkreis für das Absperrventil 40 bzw. 42 unterbrochen. Der Druck im Vorsteuerraum 60 steigt wegen der Verbindung durch den Durchlass 62 wieder auf denselben Wert an, den das Wasser im Ringkanal 48 aufweist, was zur Folge hat, dass der Verschlussteil 56 gegen den Ventilsitz 52 bewegt wird und an diesem zur Anlage kommt. Dabei wird der Wasserfluss von den Zuleitungen 20, 20′ zum Mischventil 46 langsam verkleinert und schlussendlich unterbrochen, was Druckschläge in den Zuleitungen 20, 20′ verhindert.

Auch bei dieser Ausbildungsform werden die beiden Hilfsventile 70, 70′ mittels einer einzigen Antriebsanordnung angetrieben. Diese weist einen bi-stabilen Elektromagneten auf, der durch nur kurze Impulse entgegengesetzter Polarität angesteuert ist. Dies bedingt nur einen sehr geringen Energiebedarf für das Betätigen der Armatur. Bi-Stabile Elektromagnete sind allgemein bekannt und im Handel erhältlich. Bei sich in Ruhelage befindendem Hebel 114 ist das freie Ende des Stössels 118 vom freien Ende des Betätigungsschaftes 134 beabstandet. Dies hat zur Folge, dass beim Hereinziehen des Tauchankers 112 in den Elektromagneten 34 vorerst nur Beschleunigungskräfte aber noch keine Kräfte zum Betätigen der Hilfsventile 70, 70′ auftreten. Da die Kraft des Elektromagneten auf den Tauchanker 112 zunimmt, je weiter dieser sich im Innern des Elektromagneten befindet, kann durch diese Massnahme wiederum Energie gespart werden, da der Elektromagnet kleiner dimensioniert oder mit kleineren Strömen betrieben werden kann.

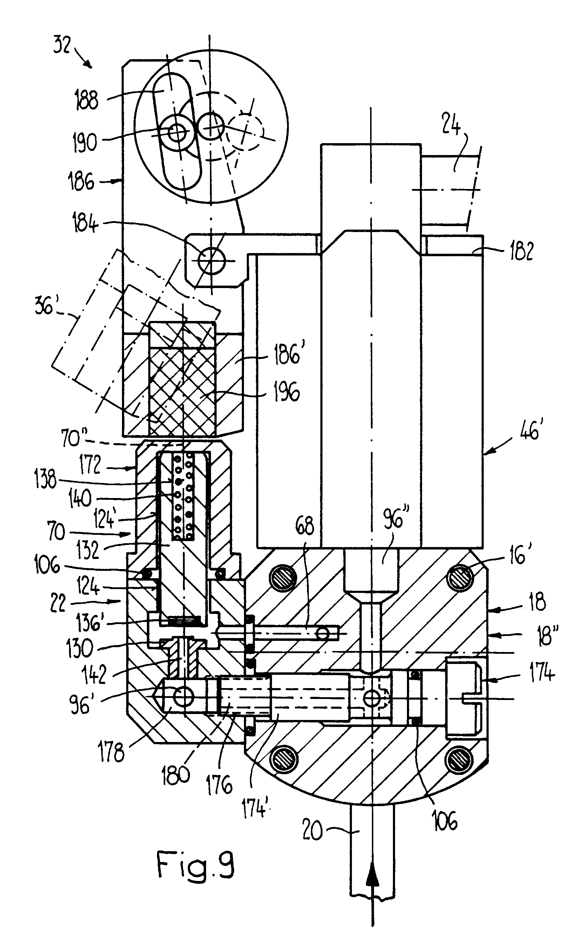

Bei beiden in den Figuren 9 bis 12 dargestellten Ausbildungsformen der Armatur ist jeweils der Hilfsventilblock 22 seitlich am Absperrventilblock 18 angeordnet. Oberhalb des Absperrventilblocks 18 ist ein Mischventilblock 46′ vorgesehen, der ebenfalls mittels nicht dargestellten Schrauben am Absperrventilblock 18 befestigt ist. Da sich die beiden Varianten im wesentlichen nur durch die Antriebsanordnung 32 für die Hilfsventile 70, 70′ unterscheiden, werden der Absperrventil-, Hilfsventil- und Mischventilblock 18, 22, 46′ gemeinsam beschrieben.

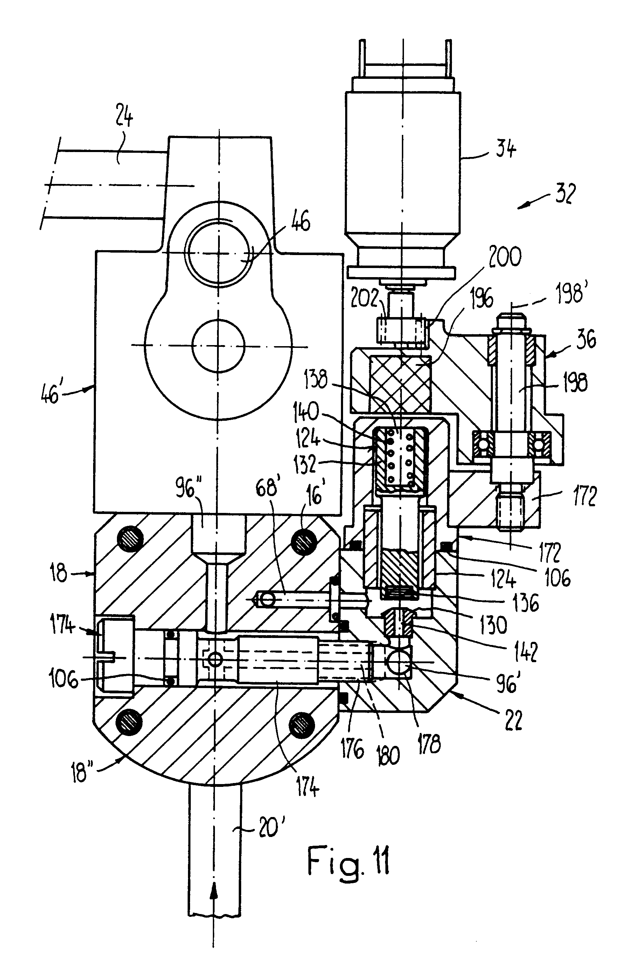

Der Absperrventilblock 18 weist einen mittleren Blockteil 18˝ auf, an welchem zwei gleich ausgebildete Teilblöcke 18′ symmetrisch angeordnet sind. Diese Teile 18′, 18˝ sind mittels in den Figuren 9 und 11 gezeigten Schrauben 16′ zusammengehalten. In gegen den mittleren Blockteil 18˝ hin offenen Ausnehmungen 54 in den Teilblöcken 18′ sind die beiden Absperrventile 40, 42 für das durch die Zuleitungen 20, 20′ zufliessende Warm- bzw. Kaltwasser vorgesehen. Die Ausnehmung 54 weist eine stufenweise Verjüngung des Durchmessers auf, in welcher der Ringkanal 48 vorgesehen ist. Dieser ist mit der betreffenden Zuleitung 20, 20′ strömungsverbunden. Der Ringkanal 48 ist, in radialer Richtung gesehen, gegen Innen von einem ringförmigen Ventilsitz 52 begrenzt, welcher den Austritt 50 des Absperrventils 40, 42 umrandet. Die Austritte 50 sind über die entsprechenden Leitungen 44, 44′ mit dem nur schematisch angedeuteten Mischventil 46 im Mischventilblock 46′ verbunden. Dieses ist gleich ausgebildet wie das in der Fig. 8 gezeigte und weiter oben ausführlich beschriebene Mischventil 46. In jeder Ausnehmung 54 ist ein gummielastischer membranförmiger Verschlussteil 56 vorgesehen, welcher mit dem entsprechenden Ventilsitz 52 zusammenwirkt. Der Verschlussteil 56 ist entlang seines Umfanges zwischen einer Erweiterung 54′ und einem in die Ausnehmung 54 hineingreifenden, ringförmigen Haltefortsatz 170 des Blockteils 18˝ klemmend gehalten. Die beiden symmetrisch zueinander angeordneten Haltefortsätze 170 begrenzen zusammen mit den beiden Verschlussteilen 56 die beiden Vorsteuerräume 60 der Absperrventile 40, 42. Die Vorsteuerräume 60 sind mittels der Durchlässe 62 im jeweiligen Verschlussteil 56 mit dem betreffenden Ringkanal 48 strömungsverbunden. In jedem Vorsteuerraum 60 ist eine Druckfeder 65 vorgesehen, die sich einerseits am Blockteil 18˝ und andererseits am plattenförmigen Verstärkungsglied 64 abstützt, welches mittels eines den Verschlussteil 56 durchdringenden kopfförmigen Fortsatzes 66 am Verschlussteil 56 dicht befestigt ist.

Die beiden Vorsteuerräume 60 sind über im zentralen Blockteil 18˝ und im Hilfsventilblock 22 eingearbeitete Steuerleitungen 68, 68′ mit den Hilfsventilen 70, 70′ verbunden.

Jede Steuerleitung 68, 68′ mündet in eine ungefähr zylinderförmige, gegen oben hin offene Bohrung 124 im Hilfsventilblock 22. Die beiden Bohrungen 124 eines Hilfsventilblockes 22 sind mittels eines blockförmigen Deckelementes 172 aus einem nicht-magnetisierbaren Material, beispielsweise Messing, überdeckt. In das Deckelement 172 sind mit den Bohrungen 124 fluchtende Sackbohrungen 124′ eingearbeitet. Im von der Bohrung 124 und Sackbohrung 124′ begrenzten Raum ist das Verschlusselement 132 vorgesehen, welches mit dem im unteren Endbereich in der Bohrung 124 vorgesehenen Hilfsventilsitz 130 zusammenwirkt. Am unteren Ende des Verschlusselementes 132 ist ein scheibenförmiges Dichtelement 136′ angeordnet, welches bei geschlossenem Hilfsventil 70, 70′ die vom Hilfsventilsitz 130 begrenzte Auslassöffnung 142 verschliesst. Dem Dichtelement 136′ gegenüberliegend weist das Verschlusselement 132 ein Sackloch 138 auf, in welchem eine Druckfeder 140 angeordnet ist, welche sich einerends am Verschlusselement 132 und andernends am Deckelement 172 abstützt. Zwischen dem Deckelement 172 und dem Hilfsventilblock 22 sind O-Ringe 106 vorgesehen, um die Bohrung 124 und Sackbohrung 124′ gegen aussen abzudichten. Das Verschlusselement 132 besteht aus einem magnetischen Material, z.B. Eisen.

Der Hilfsventilblock 22 ist mittels einer den Blockteil 18˝ durchdringenden Halteschraube 174′ an diesem befestigt. Der dem Schraubenkopf abgewandte Endbereich greift in ein Gewinde 176 in einer Bohrung 178 im Hilfsventilblock 22 ein. Die Bohrung 178 ist über Leitungen 96′ mit den Auslassöffnungen 142 der beiden Hilfsventile 70, 70′ verbunden. Im Schaft 174′ der Schraube 174 ist eine in axialer Richtung verlaufende und gegen die Bohrung 178 offene Verbindungsbohrung 180 vorgesehen, die im Mittelbereich des Schaftes 174′ in radialer Richtung offen ist. Diese Verbindungsbohrung 180 steht durch eine weitere Leitung 96˝, welche in den Blockteil 18˝ und den Mischventilblock 46′ eingearbeitet ist, mit der Auslassleitung 24, welche vom Mischventil 46 im Mischventilblock 46′ wegführt, in Strömungsverbindung. Benachbart zum Kopf der Halteschraube 174 ist im Schaft 174′ eine Umfangsnut vorgesehen, in welcher zum Abdichten ein O-Ring 106 vorgesehen ist. Der Vollständigkeit halber sei erwähnt, dass beim Uebergang einer Leitung bzw. Bohrung von einem Block bzw. Blockteil in den anderen zum Abdichten immer O-Ringe oder entsprechende Dichtelemente vorgesehen sind.

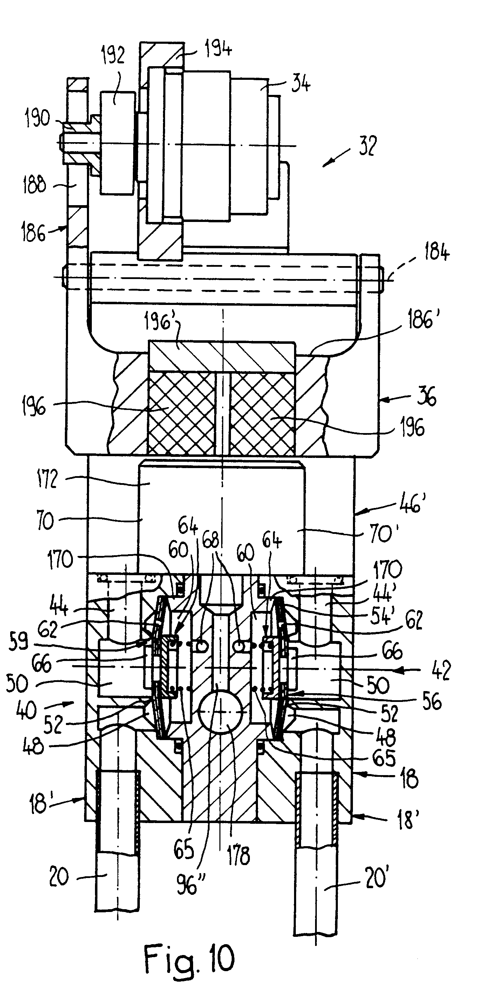

Bei der in den Figuren 9 und 10 gezeigten Armatur ist am Mischventilblock 46′ eine Lagerplatte 182 befestig, an welcher das als im wesentlichen U-förmiger Hebel ausgebildete Uebertragungselement 36 schwenkbar gelagert ist. Die Schwenkachse 184 dieser Lagerung verläuft rechtwinklig zur Achse 70˝ der Hilfsventile 70, 70′. Der eine seitliche Schenkel 186 ist über die Schwenkachse 184 hinaus in der Form eines doppelarmigen Hebels verlängert und weist in seinem freien Endbereich einen langlochförmigen Durchlass 188 auf. Dieser Durchlass 188 ist von einem Führungszapfen 190 durchsetzt, der exzentrisch auf einem scheibenförmigen Abtriebselement 192 sitzt. Das Abtriebselement 192 sitzt auf der Abtriebswelle des als Getriebemotor ausgebildeten Antriebsgliedes 34. Dieses ist von einem an der Lagerplatte 182 befestigten Halteglied 194 ortsfest gehalten. Durch Drehen des Abtriebselementes 192 ist das Uebertragungselement 36 aus der in den Figuren gezeigten Arbeitsstellung, bei welcher sich der gemeinsame Schenkel 186′ benachbart zum oberen Ende des Deckelementes 172 der Hilfsventile 70, 70′ befindet, in eine gestrichelt angegebene Ruhelage 36′ verschwenkbar. Im gemeinsamen Schenkel 186′ sind zwei Permanentmagnete 196 angeordnet, die bei sich in Arbeitslage befindendem Uebertragungselement 36 mit den Verschlusselementen 132 der Hilfsventile 70, 70′ fluchten. In dieser Lage ziehen die Permanentmagnete 196 die Verschlusselemente 132 entgegen der Kraft der Druckfedern 140 und dem resultierenden Wasserdruck gegen oben, um die Hilfsventile 70, 70′ zu öffnen und in der Offenlage zu halten. Dies ist in der Fig. 9 gezeigt. Durch Verschwenken des Uebertragungselementes 36 in die Ruhelage 36′ verringert sich die Einwirkung der Permanentmagnete 196 auf die Verschlusselemente 132, so dass sich diese in vertikaler Richtung nach unten bewegen und die Hilfsventile 70, 70′ schliessen. Um die Wirkung der Permanentmagnete 196 zu verstärken, sind diese auf der den Hilfsventilen 70, 70′ abgewandten Seite durch ein Joch 196′ miteinander verbunden.

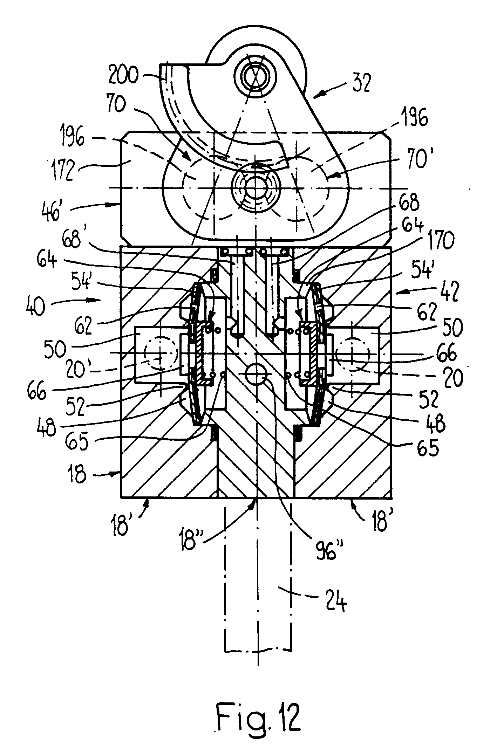

Bei der Armatur gemäss den Figuren 11 und 12 ist an einem vom Deckelelement 172 nach aussen abstehenden Halteteil 172′ eine Welle 198 befestigt, deren Achse 198′ parallel zu den Achsen 70˝ der Hilfsventile 70, 70′ verläuft. An der Welle 198 ist ein das Uebertragungselement 36 bildender Schwenkkörper gelagert, der mittels des als Motor ausgebildeten Antriebsgliedes 34 um die Achse 198′ in und ausser Ueberlappung mit dem Deckelelement 172′ der Hilfsventile 70, 70′ bringbar ist. Das Uebertragungselement 36 ist im wesentlichen dreieckförmig ausgebildet, wobei die Welle 198 in einem Eckbereich diesen durchdringt und in den beiden anderen Eckbereichen in diesen je ein Permanentmagnet 196 eingelassen ist. Befindet sich das Uebertragungselement 36 in der in den Figuren gezeigten Arbeitslage, so befinden sich die beiden Permanentmagnete 196 oberhalb der Verschlusselemente 132 der Hilfsventile 70, 70′ und ziehen diese nach oben, wie dies insbesondere aus der Fig. 11 hervorgeht. Dabei sind die Hilfsventile 70, 70′ geöffnet. Mittels des Antriebsgliedes 34 ist das Uebertragungselement 36 ungefähr um 90° aus dem Bereich der Hilfsventile 70, 70′ verschwenkbar, so dass die Permanentmagnete 196 nicht mehr auf das Verschlusselement 132 einwirken. Zu diesem Zweck weist das Uebertragungselement 136 ein zur Achse 198′ konzentrisches, kreissegmentförmiges Zahnstangensegment 200 auf, das mit einem Ritzel 202 kämmt, welches auf der Abtriebswelle des als Getriebemotor ausgebildeten Antriebsgliedes 34 sitzt.

Die beiden in den Figuren 8 bis 12 gezeigten Armaturen arbeiten wie folgt: Befinden sich keine zu waschenden Hände im Bereich des Sensors 30 (Fig. 1) so sind die Uebertragungselemente 36 in die Ruhelage 36′ verschwenkt, in welcher sich die Permanentmagnete 196 ausserhalb des Einwirkbereichs auf die Hilfsventile 170, 170′ befinden. Infolge des Eigengewichts, der Kraft der Druckfedern 140 und der resultierenden Kraft des Wasserdruckes sind die Verschlusselemente 132 gegen die Hilfsventilsitze 130 gepresst. Dadurch sind die hydraulischen Steuerkreise der Absperrventile 40, 42 unterbrochen. Infolge der Durchlässe 62 entspricht der Wasserdruck in den Vorsteuerräumen 60 dem Wasserdruck in den Ringkanälen 48, wodurch infolge der mit Wasser beaufschlagten, unterschiedlichen Flächenteile des membranförmigen Verschlussteils 56 dieser auf den Ventilsitz 52 gepresst ist. Das Verstärkungsglied 64 verhindert dabei ein Ausbuchten des Verschlussteils 56 in den Bereich des Austritts 50 und vermeidet dadurch eine Ueberanspruchung des aus gummielastischem Material gebildeten Verschlussteils 56. Die Absperrventile 40, 42 sind geschlossen. Erkennt nun der Sensor 30 zu waschende Hände, so setzt die Steueranordnung 28 die Antriebsglieder 34 in Bewegung, so dass das Uebertragungselement 36 aus der Ruhelage 36′ in die in den Figuren gezeigte Arbeitslage verschwenkt wird. Dabei kommen die Permanentmagnete 196 oberhalb der Verschlusselemente 132 der Hilfsventile 70, 70′ zu liegen und ziehen diese entgegen der Kraft der Druckfeder 140, des Eigengewichts und der resultierenden Wasserdruckkraft nach oben, wie dies in den Figuren 9 und 11 gezeigt ist. Die Hilfsventile 70, 70′ sind geöffnet, wodurch die Steuerkreise der Absperrventile 40, 42 geschlossen sind. Da die Strömungsquerschnitte von den Vorsteuerräumen 60 flussabwärts grösser sind als der Strömungsquerschnitt des Durchlasses 62, nimmt nun, durch Ausströmen von Wasser aus den Vorsteuerräumen 60 in die Auslassleitung 24, in den Vorsteuerräumen 60 der Wasserdruck allmählich ab, so dass infolge des Wasserdrucks im Bereich der Ringkanäle 48 der Verschlussteil 56 vom entsprechenden Ventilsitz 52 abgehoben wird. Dadurch kann das Wasser um den Ventilsitz 52 herum vom Ringkanal 48 in den Austritt 50 und durch die Leitungen 44 bzw. 44′ dem Mischventil 46 und der Auslassleitung 24 zufliessen. Werden nun die gewaschenen Hände aus dem Bereich des Sensors 30 gezogen, setzt die Steueranordnung 28 das Antriebsglied 34 wieder in Bewegung, wodurch die Uebertragungselemente 36 in die Ruhelage 36′ verschwenkt werden. Dabei gelangen die Permanentmagnete 196 aus dem Einwirkbereich auf die Verschlusselemente 132. Infolge der Kraft der Druckfeder 140 und des Eigengewichtes bewegen sich diese nach unten in Richtung gegen die Hilfsventilsitze 130. Sie kommen auf diesen zur Anlage und werden, unterstützt durch den Wasserdruck, auf diesen gepresst. Die Hilfsventile 70, 70′ sind geschlossen und die Steuerkreise für die Absperrventile 40, 42 unterbrochen. Das durch den Durchlass 62 in den Vorsteuerraum 60 fliessende Wasser hat zur Folge, dass sich der Druck im Vorsteuerraum 60 wieder allmählich an den Druck des zuströmenden Wassers im Ringkanal 48 angleicht. Dadurch wird der Verschlussteil 56 allmählich auf dem Ventilsitz 52 zu Anlage gebracht, wodurch der Wasserfluss unterbrochen und die Absperrventile 40, 42 geschlossen werden. Das langsame Oeffnen bzw. Schliessen der Absperrventile 40, 42 verhindert Schläge in den Zuleitungen 20, 20′.

Da die Permanentmagnete 196 etwa rechtwinklig zur Zugkraft auf die Verschlusselemente 132 aus dem Einwirkbereich auf diese verschwenkt werden, wird für das Betätigen der Armatur äusserst wenig Energie benötigt. Im weiteren können die beiden Permanentmagnete 196 bei der Ausbildungsform gemäss den Figuren 9 und 10 in Verschwenkrichtung leicht gegen einander versetzt sein, um immer zuerst das Hilfsventil 70′ zu öffnen und sicherzustellen, dass immer das andere Hilfsventil 70 zuerst geschlossen wird. Ein Verbrühen der Hände wird dadurch vermieden. Bei der Ausbildungsform gemäss den Figuren 11 und 12 überläuft der dem Hilfsventil 70 zugeordnete Permanentmagnet 196 beim Verschwenken des Uebertragungselemente 36 von der Ruhelage in die Arbeitslage immer zuerst das Hilfsventil 70′. Dies hat zur Folge, dass wiederum zuerst das Hilfsventil 70′ geöffnet und erst anschliessend das andere Hilfsventil 70 auch geöffnet wird. Beim Verschwenken des Uebertragungselementes 36 in die Ruhelage überschwenkt der dem Hilfsventil 70 zugeordnete Permanentmagnet 196 auch das andere Hilfsventil 70′, wodurch wiederum sichergestellt ist, dass immer zuerst der Kaltwasserfluss geöffnet und der Warmwasserfluss geschlossen wird.

Bei der Ausbildungsform gemäss Figuren 9 und 10 kann das als Gleichstrommotor ausgebildete Antriebsglied 34 immer in derselben Drehrichtung für das Verschwenken des Uebertragungselementes 36 drehen, was die Steueranordnung 28 vereinfacht. Bei der Armatur gemäss den Figuren 11 und 12 muss die Steueranordnung 28 den Gleichstrommotor in beiden Drehrichtungan antreiben können. Um die Steueranordnung 28 weiter vereinfachen zu können, ist es möglich, die Endlagen des Uebertragungselementes 36, ähnlich wie in der Figur 6 gezeigt, mit Reedrelais zu erfassen.

Bei allen in den Figuren gezeigten Armaturen sind die Absperrventile 40, 42 als Membranventile ausgebildet. Es ist natürlich auch denkbar, dass die Verschlussteile der Absperrventile kolbenförmig ausgebildet sind. Der Durchlass im Verschlussteil kann durch eine Leitung zwischen der betreffenden Zuleitung 20, 20′ und dem Vorsteuerraum 60 ersetzt sein. In diesem Fall ist es auch möglich, die Hilfsventile im Steuerkreis für die Absperrventile zwischen den Zuleitungen 20, 20′ und den Vorsteuerräumen vorzusehen. Die Absperrventile sind dann derart auszubilden, dass sie beispielsweise mittels Federn in der Schliessstellung gehalten sind und beim Oeffnen der Hilfsventile in die Offenstellung überführt werden. Dies kann beispielsweise mittels eines vom Wasserdruck im Steuerkreis betätigbaren Hilfskolbens geschehen. Im weiteren ist es auch möglich, die Antriebsglieder anders auszubilden. So können die Gleichstromgetriebemotoren durch Elektromagnete - oder umgekehrt - ausgetauscht werden.

Vorteilhafterweise ist der Absperrventilblock 18 und Hilfsventilblock 22 bzw. Mischventilblock 46′ quaderförmig ausgebildet. Diese lassen sich dann einzeln in vorteilhafter Weise mit konventionellen, numerisch gesteuerten Bearbeitungsmaschinen bzw. Bearbeitungszentren spanabhebend bearbeiten. Die Trennung der Hilfsventile von den Absperrventilen erlaubt einen einfachen und betriebssicheren Aufbau der Armaturen.

## Patentansprüche

1. Elektrisch gesteuerte sanitäre Armatur, insbesondere Waschbeckenarmatur, mit einem Warmwasser- und einem Kaltwassereinlass (20,20') und einem Auslass (24), je einem zum freigebbaren Sperren des Warm- und Kaltwasserflusses zwischen dem betreffenden Einlass (20,20') und dem Auslass (24) angeordneten hydraulisch betätigbaren Absperrventil (40,42), das ein membran- oder kolbenförmiges Verschlussteil (56) aufweist, auf dessen einen Seite ein mit diesem Verschlussteil (56) zusammenwirkender Ventilsitz (52) und andern Seite ein, über einen Durchlass (62) mit dem jeweiligen Einlass (20,20') verbundender Vorsteuerraum (60) angeordnet ist, je einem Hilfsventil (70,70') pro Absperrventil (40,42) um die Vorsteuerräume (60) zum Oeffnen der Absperrventile (40,42) mit dem Auslass (24) zu verbinden und zum Schliessen der Absperrventile (40,42) von diesem abzutrennen, und einer beiden Hilfsventilen (70,70') gemeinsamen, elektrisch gespeisten Antriebsanordnung (32), dadurch gekennzeichnet, dass die einerseits mit dem Auslass (24) verbundenen Hilfsventile (70,70') nebeneinanaer, zwischen Vorsteuerräume und Auslass angeordnet und andererseits über Steuerleitungen (68,68') mit den entsprechenden Vorsteuerräumen (60) verbunden sind.

2. Armatur nach Anspruch 1, dadurch gekennzeichnet, dass die Antriebsanordnung (32) ein elektrisch gespeistes Antriebsglied (34) und ein mit diesem wirkverbundenes, auf beide Hilfsventile (70, 70') einwirkendes Uebertragungselement (36) aufweist.

3. Armatur nach Anspruch 1 oder 2, dadurch gekennzeichnet, dass die Hilfsventile (70, 70') gleich ausgebildet sowie parallel zueinander angeordnet sind.

4. Armatur nach Anspruch 2 oder 3, dadurch gekennzeichnet, dass das Antriebsglied (34) eine, vorzugsweise bistabile Elektromagnetanordnung mit einem Anker (112) aufweist, der vorzugsweise über ein Uebersetzungsgestänge (114) beide Hilfsventile (70, 70') betätigt.

5. Armatur nach Anspruch 4, dadurch gekennzeichnet, dass jedes Hilfsventil (70, 70') einen ortsfesten, ringförmigen Hilfsventilsitz (130) und ein damit zusammenwirkendes Verschlusselement (132) mit einem sich durch den Hilfsventilsitz (130) hindurcherstreckenden Betätigungsschaft (134) aufweist.

6. Armatur nach Anspruch 5, dadurch gekennzeichnet, dass das Uebersetzungsgestänge (114) für jedes Hilfsventil (70, 70') einen Stössel (118) aufweist der in seiner Ruhestellung vom betreffenden Betätigungsschaft (134) abgehoben ist und beim Verbringen in die Arbeitstellung (114') zum Betätigen des Verschlusselementes (132) auf den Betätigungsschaft (134) aufläuft.

7. Armatur nach Anspruch 6, dadurch gekennzeichnet, dass das dem Stössel (118) zugewandte Ende des Betätigungsschaftes (134) bezüglich des Hilfsventilsitzes (130) auslasseitig vorgesehen ist.

8. Armatur nach Anspruch 2 oder 3, dadurch gekennzeichnet, dass die Hilfsventile (70, 70') magnetisch betätigbar sind und das Uebertragungselement (36) eine Permanentmagnetanordnung (196) aufweist, die mittels des Antriebsgliedes (34) in und ausser Einwirkung auf die Hilfsventile (70, 70') bringbar ist.

9. Armatur nach Anspruch 8, dadurch gekennzeichnet, dass die Bewegungsrichtung der Permanentmagnetanordnung (196) quer zu Richtung der Krafteinwirkung auf die Hifsventile(70, 70') verläuft.

10. Armatur nach einem der Ansprüche 1 bis 3, gekennzeichnet durch ein Keramikscheibenventil (72) mit zwei aneinanderanliegenden, mittels der Antriebsanordnung (32) gegeneinander verdrehbaren Keramikscheiben (74, 74'), an welchen die beiden Hilfsventile (70, 70') ausgebildet sind.

11. Armatur nach Anspruch 10, dadurch gekennzeichnet, dass eine Keramikscheibe (74) fest angeordnet ist und je einen mit dem entsprechenden Vorsteuerraum (60) verbundenen Steuerdurchlass (94, 94') aufweist, und die andere Keramikscheibe (74) verdrehbar ausgebildet und mit einer mit dem Auslass (24) verbundenen Steuernut (92) versehen ist, die durch Verdrehen der Keramikscheibe (74') mit den beiden Steuerdurchlässen (94, 94') in und ausser Strömungsverbindung bringbar ist.

12. Armatur nach Anspruch 11, dadurch gekennzeichnet, dass die fest angeordnete Keramikscheibe (74) im Bereich der Drehachse (88) der verdrehbaren Keramikscheibe (74') eine mit dem Auslass (24) verbundene Durchtrittsöffnung (96) aufweist, die beiden mit den Vorsteuerräumen (60) verbundenen Steuerdurchlässen (94, 94') bezüglich dieser Drehachse (88) einander ungefähr diametral leicht versetzt gegenüberliegen, und die Steuernut (92) im Bereich dieser Steuerdurchlässe (94, 94') breiter ausgebildet ist, um immer zuerst das Absperrventil (42) für das Kaltwasser zu öffnen und immer zuerst jenes für das Warmwasser (40) zu schliessen.

13. Armatur nach einem der Ansprüche 10 bis 12, dadurch gekennzeichnet, dass die Antriebsanodnung (32) einen elektrischen Getriebemotor aufweist, der über einen Kurbeltrieb (98, 100, 102) mit dem Keramikscheibenventil (72) verbunden ist.

14. Armatur nach einem der Ansprüche 1 bis 13, dadurch gekennzeichnet, dass den beiden Absperrventilen (40, 42) ein Mischventil (46) nachgeschaltet ist.

15. Armatur nach Anspruch 14, dadurch gekennzeichnet, dass das Mischventil (46) zwei je mit einem Absperrventil (40, 42) strömungsverbundene Zuleitungen (44, 44'), die mit voneinander beabstandeten, miteinander im wesentlichen fluchtenden und gegeneinander gerichteten, ringförmigen Mischventilsitzen (154, 154') begrenzt sind, und eine zwischen den Mischventilsitzen (154, 154') hin und her verschiebbare, mit ihren Seitenflächen mit diesen zusammenwirkende Scheibe (156), vorzugsweise aus gummielastischem Material aufweist, wobei der Bereich zwischen den Mischventilsitzen (154, 154') mit dem Auslass (24) verbunden ist.

16. Armatur nach einem der Ansprüche 1 bis 15, dadurch gekennzeichnet, dass die Absperrventile (40, 42) und die Hilfsventile (70, 70') je in einem individuell herstellbaren Block (18, 22) angeordnet und die Blöcke (18, 22) aneinanderanliegend miteinander verbunden sind, und dass die Verbindungsleitungen (68, 68') zwischen den Absperr- (40, 42) und Hilfsventilen (70, 70') in den Blöcken (18, 22) vorgesehen sind.

17. Armatur nach Anspruch 14 und 16, dadurch gekennzeichnet, dass die Hilfsventile (70, 70') und das Mischventil (46) im selben Block (22) vorgesehen sind, und die Zuleitungen (44, 44') von den Absperrventilen (40, 42) zum Mischventil (46) in den Blöcken (18, 22) ausgearbeitet sind.

## Claims

1. Electrically controlled sanitary fitting, in particular a washbasin fitting, having a hot water inlet and a cold water inlet (20, 20') and an outlet (24) in each case one hydraulically operable shutoff valve (40, 42) arranged between the relevant inlet (20, 20') and the outlet (24) for releasable blocking of the hot and cold water flow, which valve has a diaphragm-shaped or piston-shaped closure part (56), on the one side of which there is provided a valve seat (52) interacting with this closure part (56) and, on the other side, a pilot control space (60) which is connected to the respective inlet (20, 20') via a passage (62), for each shutoff valve (40, 42) an auxiliary valve (70,70') to connect the pilot control spaces (60) to the outlet (24) for opening the shutoff valves (40, 42) and to separate the said spaces from the said outlet for closing the shutoff valves (40, 42), and an electrically fed drive arrangement (32) common to the two auxiliary valves (70, 70'), characterized in that the auxiliary valves (70, 70'), connected on one side to the outlet (24), are arranged adjacently and are connected on the other side via control lines (68, 68') to the corresponding pilot control spaces (60).

2. Fitting according to Claim 1, characterized in that the drive arrangement (32) has a drive member (34) fed by electricity and a transmission element (36) which is in effective connection with said drive member and acts on both auxiliary valves (70, 70').

3. Pitting according to Claim 1 or 2, characterized in that the auxiliary valves (70, 70') are of identical construction and are arranged parallel to each other.

4. Fitting according to Claim 2 or 3, characterized in that the drive member (34) has a preferably bistable solenoid arrangement with a plunger (112) which operates both auxiliary valves (70, 70') preferably via a transmission linkage (114).

5. Fitting according to Claim 4, characterized in that each auxiliary valve (70, 70') has a stationary, annular auxiliary valve seat (130) and a closure element (132) interacting with said auxiliary valve seat having an operating shaft (134) extending through the auxiliary valve seat (130).

6. Fitting according to Claim 5, characterized in that the transmission linkage (114) for each auxiliary valve (70, 70') has a tappet (118) which, in its position of rest, is lifted from the relevant operating shaft (134) and, when it is moved into the operating position (114') contacts the operating shaft (134) to operate the closure element (132).

7. Fitting according to Claim 6, characterized in that the end of the operating shaft (134) facing the tappet (118) is provided on the outlet side relative to the auxiliary valve seat (130).

8. Fitting according to Claims 2 or 3, characterized in that the auxiliary valves (70, 70') can be operated magnetically, and the transmission element (36) has a permanent magnet arrangement (196), which can be brought into and out of action on the auxiliary valves (70, 70') by means of the drive member (34).

9. Fitting according to Claim 8, characterized in that the direction of movement of the permanent magnet arrangement (196) extends transversely in relation to the direction of the action of force on the auxiliary valves (70, 70').

10. Fitting according to any of Claims 1 to 3, characterized by a ceramic disc valve (72) having two ceramic discs (74, 74') which are located next to each other and can be rotated counter to each other by means of the drive arrangement (32) and on which the two auxiliary valves (70, 70') are constructed.

11. Fitting according to Claim 10, characterized in that one ceramic disc (74) is arranged fixedly and has in each case a control passage (94, 94') connected to the corresponding pilot control space (60) and the other ceramic disc (74) is constructed to be rotatable and is provided with a control groove (92) connected to the outlet (24), which control groove can be brought into and out of flow connection with the two control passages (94, 94') by rotating the ceramic disc (74').

12. Fitting according to Claim 11, characterized in that the fixedly arranged ceramic disc (74) has a passage opening (96) connected to the outlet (24) in the region of the rotating axle (88) of the rotatable ceramic disc (74'), the two control passages (94, 94') connected to the pilot control rooms (60) are located approximately diametrically opposite each other but slightly offset relative to this rotating axle (88), and the control groove (92) is constructed so as to be wider in the region of these control passages (94, 94') in order always to open the shutoff valve (42) for the cold water first and always to close that for the hot water (40) first.

13. Fitting according to any one of Claims 10 to 12, characterized in that the drive arrangement (32) has an electric gear motor which is connected to the ceramic disc valve (72) via a crank mechanism (98, 100, 102).

14. Fitting according to any of Claims 1 to 13, characterized in that a mixing valve (46) is connected downstream from the two shutoff valves (40, 42).

15. Fitting according to Claim 14, characterized in that the mixing valve (46) has two feedlines (44, 44') which are connected in terms of flow in each case to one shutoff valve (40, 42), which are bounded by annular mixing valve seats (154, 154') which are spaced apart, are essentially aligned with one another and are directed counter to one another, and a disc (156), preferably made of rubber elastic material, which is displaceable back and forth between the mixing valve seats (154, 154') and interacts with its lateral surfaces with said mixing valve seats, the region between the mixing valve seats (154, 154') being connected to the outlet (24).

16. Fitting according to any of Claims 1 to 15, characterized in that the shutoff valves (40, 42) and the auxiliary valves (70, 70') are each arranged in a block (18, 22) which can be manufactured individually and the blocks (18, 22) are connected to each other located next to each other, and in that the connection lines (68, 68') between the shutoff valves (40, 42) and the auxiliary valves (70, 70') are provided in the blocks (18, 22).

17. Fitting according to Claims 14 and 16, characterized in that the auxiliary valves (70, 70') and the mixing valve (46) are provided in the same block (22) and the feedlines (44, 44') from the shutoff valves (40, 42) to the mixing valve (46) are worked out of the blocks (18, 22).

## Revendications

1. Vanne sanitaire commandée électriquement, en particulier vanne de lavabo, avec une arrivée d'eau chaude et une arrivée d'eau froide (20, 20') et une sortie (24), avec sur chacune une soupape d'arrêt (40, 42) à commande hydraulique disposée entre l'arrivée respective (20, 20') et la sortie (24) pour arrêter temporairement l'écoulement d'eau chaude et d'eau froide, qui présente une pièce de fermeture (56) en forme de membrane ou de piston, d'un côté de laquelle est disposé un siège de soupape (52) coopérant avec cette pièce de fermeture (56) et de l'autre côté de laquelle est disposé un volume de commande pilote (60) relié par un passage (62) à l'arrivée respective (20, 20'), avec une soupape auxiliaire respective (70, 70') par soupape d'arrêt (40, 42) pour relier les volumes de commande pilote (60) à la sortie (24) afin d'ouvrir les soupapes d'arrêt (40, 42) et pour les isoler de celle-ci afin de fermer les soupapes d'arrêt (40, 42), et avec un dispositif moteur (32) à alimentation électrique, commun aux deux soupapes auxiliaires (70, 70'), caractérisée en ce que les soupapes auxiliaires (70, 70') reliées d'une part à la sortie (24) sont disposées l'une à côté de l'autre et sont d'autre part reliées aux volumes de commande pilote (60) correspondants par des conduites de commande (68, 68').

2. Vanne suivant la revendication 1, caractérisée en ce que le dispositif moteur (32) présente un organe moteur (34) à alimentation électrique et un élément de transmission (36) relié activement à celui-ci et agissant sur les deux soupapes auxiliaires (70, 70').

3. Vanne suivant la revendication 1 ou 2, caractérisée en ce que les soupapes auxiliaires (70, 70') sont identiques et disposées parallèlement l'une à l'autre.

4. Vanne suivant la revendication 2 ou 3, caractérisée en ce que l'organe moteur (34) présente un dispositif électromagnétique, de préférence bistable, avec un induit (112), qui actionne les deux soupapes auxiliaires (70, 70') de préférence par l'intermédiaire d'une tige de démultiplication (114).

5. Vanne suivant la revendication 4, caractérisée en ce que chaque soupape auxiliaire (70, 70') présente un siège de soupape auxiliaire (130), annulaire et fixe, et un élément de fermeture (132) coopérant avec celui-ci, avec un arbre de commande (134) s'étendant à travers le siège de soupape auxiliaire (130).

6. Vanne suivant la revendication 5, caractérisée en ce que la tige de démultiplication (114) présente pour chaque soupape auxiliaire (70, 70') une tige-poussoir (118) qui, dans sa position de repos, est écartée de l'arbre de commande (134) concerné et qui, lors de sa venue dans sa position de travail (114'), pousse sur l'arbre de commande (134) pour actionner l'élément de fermeture (132).

7. Vanne suivant la revendication 6, caractérisée en ce que l'extrémité de l'arbre de ommande (134) proche de la tige-poussoir (118) est prévue du côté de la sortie par rapport au siège la soupape auxiliaire (130).

8. Vanne suivant la revendication 2 ou 3, caractérisée en ce que les soupapes auxiliaires (70, 70') peuvent être actionnées magnétiquement et en ce que l'élément de transmission (36) présente un dispositif à aimant permanent (196), qui peut être amené en position d'action sur les soupapes auxiliaires (70, 70') et hors de cette position au moyen de l'organe moteur (34).

9. Vanne suivant la revendication 8, caractérisée en ce que la direction du mouvement du dispositif à aimant permanent (196) est perpendiculaire à la direction des efforts exercés sur les soupapes auxiliaires (70, 70').

10. Vanne suivant une des revendications 1 à 3, caractérisée par une soupape à disques céramiques (72), avec deux disques céramiques (74, 74') appliqués l'un contre l'autre, tournant l'un par rapport à l'autre au moyen du dispositif moteur (32), sur lesquels sont formées les deux soupapes auxiliaires (70, 70').

11. Vanne suivant la revendication 10, caractérisée en ce qu'un disque céramique (74) est fixe en position et présente un passage de commande (94, 94') relié respectivement au volume de commande pilote (60) correspondant, et en ce que l'autre disque céramique (74') est rotatif et est pourvu d'une rainure de commande (92) reliée à la sortie (24) et qui, par rotation du disque céramique (74'), peut être mise en position de communication et de non-communication avec les deux passages de commande (94, 94').

12. Vanne suivant la revendication 11, caractérisée en ce que le disque céramique (74) fixe en position présente dans la région de l'axe de rotation (88) du disque céramique rotatif (74') une ouverture traversante (96) reliée à la sortie (24), en ce que les deux passages de commande (94, 94') reliés aux volumes de commande pilote (60) sont situés en opposition l'un à l'autre par rapport à cet axe de rotation (88), en position sensiblement diamétrale avec un léger décalage, et en ce que la rainure de commande (92) est plus large dans la région de ces passages de commande (94, 94'), pour toujours ouvrir d'abord la soupape d'arrêt (42) de l'eau froide et toujours fermer d'abord celle (40) de l'eau chaude.

13. Vanne suivant l'une des revendications 10 à 12, caractérisée en ce que le dispositif moteur (32) présente un moto-réducteur électrique, qui est relié à la soupape à disques céramiques (72) par un mécanisme à manivelle (98, 100, 102).

14. Vanne suivant l'une des revendications 1 à 13, caractérisée en ce qu'un mitigeur (46) est disposé après les deux soupapes d'arrêt (40, 42).

15. Vanne suivant la revendication 14, caractérisée en ce que le mitigeur (46) présente deux conduites d'entrée (44, 44') raccordées pour l'écoulement chacune avec une soupape d'arrêt (40, 42), qui se terminent par deux sièges de mitigeur (154, 154') annulaires, distants l'un de l'autre, sensiblement au niveau l'un de l'autre et dirigés l'un vers l'autre, et un disque (156) à mouvement alterné entre les sièges de mitigeur (154, 154') et coopérant par ses faces latérales avec ceux-ci, réalisé de préférence en gomme élastique, la région comprise entre les sièges de mitigeur (154, 154') étant en communication avec la sortie (24).

16. Vanne suivant l'une des revendications 1 à 15, caractérisée en ce que les soupapes d'arrêt (40, 42) et les soupapes auxiliaires (70, 70') sont chacune disposées dans un bloc (18, 22) réalisable indivi-duellement et les blocs (18, 22) sont assemblés en les appliquant l'un sur l'autre et en ce que les conduites de liaison (68, 68') sont prévues entre les soupapes d'arrêt (40, 42) et les soupapes auxiliaires (70, 70') dans les blocs (18, 22).

17. Vanne suivant la revendication 14 et 16, caractérisée en ce que les soupapes auxiliaires (70, 70') et le mitigeur (46) sont prévus dans le même bloc (22), et en ce que les conduites d'entrée (44, 44') menant des soupapes d'arrêt (40, 42) au mitigeur (46) sont usinées dans les blocs (18, 22).
